# EUROPEAN PATENT APPLICATION

(11) **EP 4 653 742 A1**
(43) Date of publication of application: **26.11.2025**
(21) Application number: 25177682.9
(22) Date of filing: 20.05.2025
(51) Int. Cl.: F16L 33/207

(54) **A PRESS COUPLING FOR PEX-TUBING**

(30) Priority: 21.05.2024 SE 2450550
(71) Applicant: Villeroy & Boch Gustavsberg AB, 134 29 Gustavsberg (SE)
(72) Inventor: Olofsson, Billy, 441 75 Sollebrunn (SE)
(74) Representative: Valea AB

(57) **Abstract**

The coupling device (1) for tubing, typically for plastic tubing such as PEX-tubing or ALU PEX-tubing, comprises a core member (2) and a metal sleeve (3). The core member (2) includes a substantially cylindrical first end portion (4) designed for insertion into a piece of tubing (T). This first end portion (4) extends along a longitudinal axis (L) from a base portion (4a) to a free end portion (4b) and is equipped with multiple circumferential ridges (5) on its radial outside. The metal sleeve (3), which is also substantially cylindrical, is positioned radially outside the first end portion (4), creating a space (S) between them to accommodate the tubing (T). The metal sleeve (3) is securely attached to the core member (2) at a specific position and extends axially along the longitudinal axis (L) between an inner end portion (3a) and an outer end portion (3b). Additionally, the metal sleeve (3) features one or more elongate openings (6), each extending along the longitudinal axis (L) and forming a confined through opening that spans from the inner end portion (3a) to the outer end portion (3b).

## Description

### Technical field

The present invention relates to a coupling device for tubing, such as PEX-tubing or ALU PEX-tubing. Typically, the coupling device is used for tubing of tap water systems.

### Background

When tubing is used to build tap water systems, each end of a piece of tubing is connected to a respective coupling device. Specifically for plastic tubing, there are a lot of different manufacturers of tubing and the outer diameter and inner diameter of the tubing varies slightly between different manufacturers. If a coupling device from a specific manufacturer is used, that coupling device is typically designed to fit good with the tubing from the same manufacturer, but the same fitting will often not fit well to tubing from other manufacturers. If you do a new installation of tubing for a whole building, compatibility between tubing and coupling device is typically less of a problem since you bring all new material to the building site and acquire correct connectors for the tubing you bring along. However, if you are to do some post-installation work on the tap water system of a building, you would not know what manufacturer and dimension of tubing was used until you pay a visit to the building and measure the diameter of tubing used for each piece of tubing on which work is to be performed. Hence, you would need to bring multiple coupling devices to make sure you are equipped with a correct coupling device for the type of tubing you find.

Accordingly, it would be advantageous to provide a coupling device compatible with tubing from various manufacturers.

EP2677223A1 discloses a fitting for connecting pipes comprising at least a first and a second tubular element respectively provided with a first and a second inlet/outlet opening. The fitting further comprises at least first blocking means comprising a sleeve and a blocking ring. The sleeve is associated to the first tubular element such as to surround it externally and create, therebetween an annular housing to receive a pipe. The sleeve is to be radially deformed to hold the pipe pressed against the first tubular element.

EP1479961A1 discloses a press fitting having a widened connecting end with a fitting body which has a support bush for the connecting end of the tube, and a pressing bush of deformable plastic material to press the connecting end of the tube against the support bush. The pressing bush has two concentric axial sectors, one of which projects from the support bush and becomes smaller in internal diameter than the first sector under pressure.

### Summary

The above-mentioned drawbacks are mitigated by a coupling device according to the invention. The coupling device is for tubing, typically for plastic tubing such as PEX-tubing or ALU PEX-tubing. The coupling device comprises a core member and a metal sleeve. The core member comprises a substantially cylindrical first end portion for insertion into a piece of tubing. The first end portion extends along a longitudinal axis from a base portion of the first end portion to a free end portion of the first end portion. The first end portion is provided with a plurality of circumferential ridges provided on a radial outside of the first end portion with respect to the longitudinal axis. The metal sleeve is substantially cylindrical and provided radially outside of the first end portion such that a space is formed between the first end portion and the metal sleeve for receiving said piece of tubing between the first end portion and the metal sleeve.

The metal sleeve extends axially along the longitudinal axis between an inner end portion of the metal sleeve and an outer end portion of the metal sleeve. The metal sleeve is attached at to the core member at a pre-determined position relatively the core member. Further, the metal sleeve comprises one or more elongate openings, each elongate opening extending along the longitudinal axis. Each one of the one or more elongate openings may extend between the inner end portion and the outer end portion such that a respective confined through opening is formed.

Upon attachment of the tubing to the coupling device, the tubing is inserted into the space between the metal sleeve and the first end portion of the core member until the tubing is seated at the bottom of the space. A standard press tool (using a TH-type pressing tong) is then applied over the sleeve and operated to compress the sleeve radially inwards with respect to the longitudinal axis to the predetermined outer shape defined by the press tool. The radial compression of the sleeve reduces the space and forces the tubing against the first end portion of the core member such that the circumferential ridges are forced radially into the material of the tubing and thereby mechanically engages the tubing to in a fixed position with respect to the coupling device. Upon compression, the metal sleeve is plastically deformed and thus remains compressed after removal of the press tool. The elongate openings enable the metal sleeve to assume a substantially cylindrical shape after radial compression and thus enable an even application of radial press force from the sleeve onto the tubing. Since the sleeve is attached to the core member, at least before use of the press tool, the sleeve will maintain its intended position relatively the core member upon insertion of the tubing into the coupling device, thus promoting correct installation of the coupling device, whilst reducing the risk of losing the metal sleeve upon handing of the coupling device before use.

The confined nature of each elongate opening means that the elongate opening is surrounded by metal also at its respective opposite ends, and the material at each end of the elongate opening can thus be plastically deformed upon compression by the press tool, thereby providing a sleeve well-defined geometry of the metal sleeve at both ends of the elongate opening. This in turn provides for a robust metal sleeve, capable of providing a robust clamping force on the tubing.

Each one of the one or more elongate openings may extend partially along the length of the metal sleeve from an open end portion of the respective elongate opening at the inner end portion or at the outer end portion, towards a closed end portion of the respective elongate opening at the other one of the inner end portion or the outer end portion.

The open-ended nature of each elongate opening enables reduction of a circumferential size of the metal sleeve at the portion of the metal sleeve at the open end of the respective elongate opening with reduced need of creep of material of the metal sleeve. This enables a smoother inner surface of the metal sleeve after compression and enables use of lower compression force at compression of the metal sleeve. Also, the metal sleeve will be able to expand upon insertion of an oversized tubing into the space between the core member and the metal sleeve.

The coupling device may comprise a plurality of said elongate openings, wherein at least one of said plurality of elongate openings is adapted such that its respective open end portion is positioned at the inner end portion of the metal sleeve, and wherein at least one of said plurality of elongate openings is adapted such that its respective open end portion is positioned at the outer end portion of the metal sleeve.

Such configuration of the open ends of the elongate openings enables reduction of a circumferential size of the metal sleeve at both ends of the metal sleeve with reduced need of creep of material of the metal sleeve. This enables a smoother inner surface of the metal sleeve after compression and enables use of lower compression force at compression of the metal sleeve. Also, the metal sleeve will be able to expand upon insertion of an oversized tubing into the space between the core member and the metal sleeve.

The metal sleeve may be attached to the core member at the base portion of the first end portion.

By attaching the sleeve to the core member at the base portion of the first end portion, the material needed to attach the metal sleeve will not interfere with the tubing upon insertion of the tubing into the coupling device, thereby allowing the metal sleeve to maintain its position upon insertion of the tubing.

The coupling device may further comprise a ring attaching the metal sleeve to the core member.

The ring acts as an adapter between the metal sleeve and the core member, thus simplifying the design of the metal sleeve and enabling easier production.

The ring may comprise one or more attachment portions extending over a radial outside of the metal sleeve, said attachment portions engaging the inner end portion of the metal sleeve to attach the metal sleeve to the ring.

The attachment portion attaches the metal sleeve to the ring, and thus to the rest of the coupling device. Since the ring engages the radial outside of the metal sleeve, the ring will not interfere with the seal formed at compression between the metal sleeve and the core member.

The inner end portion of the metal sleeve may comprise a circumferential recess provided on a radial outside of the metal sleeve, wherein the one or more attachment portions engage the circumferential recess of the metal sleeve.

The circumferential recess enables improved mechanical grip between the ring and the metal sleeve such that the attachment between ring and metal sleeve is not dependent on friction alone, or on an adhesive between the metal sleeve and the ring.

The ring may comprise a central recess adapted to receive an end portion of the piece of tubing and comprises one or more inspection openings extending radially through the material of the ring such that the piece of tubing inserted into the central recess is visible through the one or more inspection openings.

When an end portion of a piece of tubing is fully inserted into the space between the metal sleeve and the core member, the end portion of the piece f tubing is visible through the one or more inspection openings such an operator knows that the coupling device is correctly aligned with the tubing before compression of the coupling device.

The ring may comprise an alignment protrusion extending radially outwards, said protrusion being suitable for aligning the metal sleeve with a guide recess of a pressing tong, such as a TH-type pressing tong.

By providing the alignment protrusion on the ring, manufacturing of the metal sleeve and of the core member may be kept simple. Since the alignment protrusion is not provided on the metal sleeve, deformation of the metal sleeve will not affect the alignment.

The metal sleeve may comprise at least one radial protrusion extending radially inwards with respect to the longitudinal axis.

The radial protrusion increases the total radial thickness of the metal sleeve without requiring increase of material thickness of the metal sleeve. The inner diameter at the radially innermost portion of the radial protrusion is positioned at a radial distance from the longitudinal axis large enough to enable insertion of the outer diameter of the largest type of tubing commonly available on the market. The protrusion thus enables the outer diameter of the metal sleeve to be positioned further radially outwards. At compression, the final outer shape of the coupling device is defined by the pressing tong used; Accordingly, the compressed outer shape of the metal sleeve is defined, and the radial protrusion will thus enable increased radial compression locally by the radial protrusion. Accordingly, when some other type of tubing is used with the coupling, said other type of tubing having a slightly smaller outer diameter, the radial protrusion ensures that the metal sleeve still fully compresses the tubing to provide a proper seal between the core member and the tubing.

The first end portion of the core member may comprise one or more circumferential recesses, and a respective elastic ring-shaped sealing element seated in the respective circumferential recess, each circumferential recess being axially aligned with one of said at least one radial protrusions.

The combination of radial protrusion and sealing element aligned with the radial respective protrusion enables the radial protrusion to be moved further radially inwards at compression of the metal sleeve with less deformation of the radial protrusion of the metal sleeve and with reduced creep of material of the metal sleeve and of the tubing. The sealing element ensures that the radial protrusion seals to the tubing at the circumferential recess of the core member.

The sealing element may comprise an O-ring.

O-rings are commonly available and provide a uniform seal around the circumferential recess. Alternatively, an elastomer could be molded over a portion of the core member.

The outer end portion of the metal sleeve may be frustoconical with a larger diameter closer to the outer end portion of the metal sleeve and a smaller diameter closer to the inner end portion of the metal sleeve.

The frustoconical portion provides a lead-in portion receiving and forcing a piece of tubing to alignment with the longitudinal axis at insertion of the tubing into the coupling device. Accordingly, easier assembly of the coupling device to the tubing is achieved.

A second aspect of the invention is related to a system comprising the coupling device according to any one of claims 1-14, also described above, and a press tool. The press tool comprises a pressing tong adapted to be movable between an open position for insertion of the metal sleeve of the coupling device into a compression gap of the pressing tong, and a closed position in which the gap is reduced such that at least a central portion of the metal sleeve is forced by the pressing tong to assume a radially compressed shape.

The pressing tong may be a TH-type pressing tong. The TH-type pressing tong fits well with the proposed coupling device and is commonly available.

### Brief description of drawings

Fig. 1 shows a cross-sectional side view of an embodiment of the coupling device according to the invention. The figure shows the coupling device with a quarter of the coupling device removed for illustrative purposes.
Fig. 2 shows a only the metal sleeve also shown in fig. 1.
Fig. 3 shows a perspective view of half the coupling device also shown in fig. 1.
Figs. 4 and 5 show an alternative embodiment of the metal sleeve.
Fig. 6 shows the coupling device together with a schematic view of half a pressing tong before the coupling device is seated in the pressing tong.
Fig. 7 shows a top view of the pressing tong and the coupling device also shown in fig. 6.

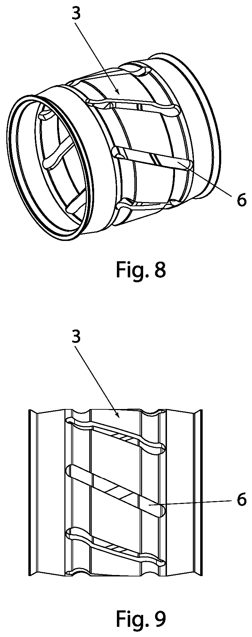

Fig. 8 shows a perspective view of an alternative embodiment of the metal sleeve, having elongate slits extending along the longitudinal axis whilst also extending along a portion of the circumference of the metal sleeve. Hence, each elongate slit extends non-parallel with respect to the longitudinal axis, yet the extent has a component along the longitudinal axis.
Fig. 9 shows a side view of the embodiment of the metal sleeve also shown in fig. 8.

### Detailed description

Embodiments of a coupling device according to the present invention will hereinafter be described with reference to the appended drawings.

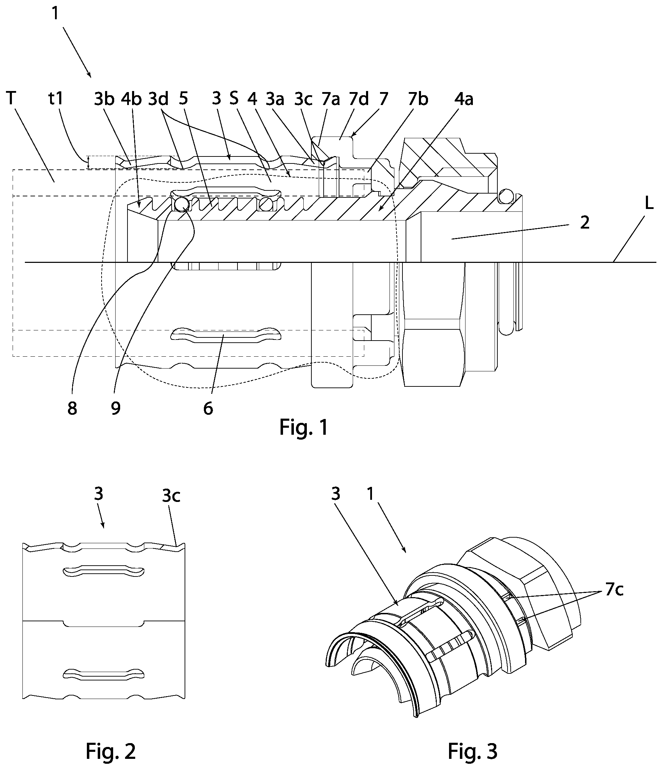

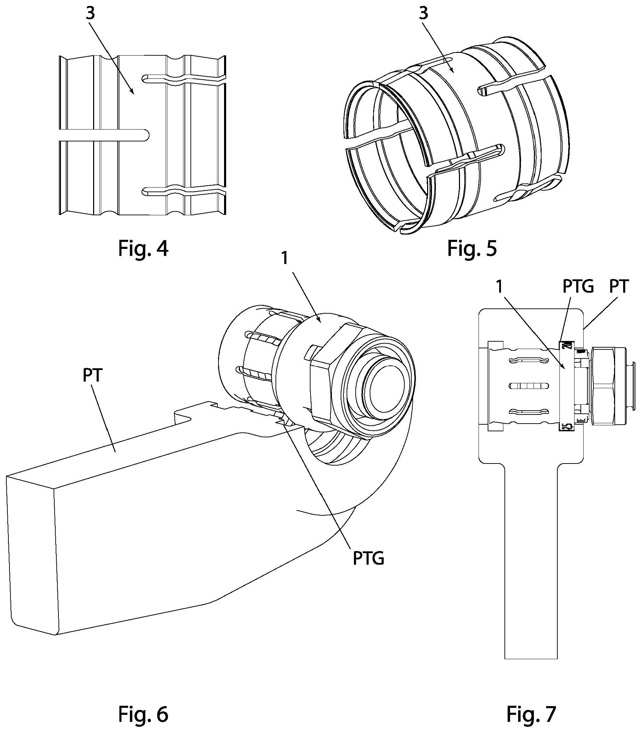

Figs. 1-3 and 6-7 show the coupling device 1 according to the first embodiment. An alternative embodiment of the metal sleeve 3 is shown in figs. 4-5.

The coupling device 1 is suitable for use with tubing T, typically plastic tubing such as PEX-tubing or ALU PEX-tubing. The coupling device 1 comprises a core member 2 and a metal sleeve 3.

As shown in fig. 1, the core member 2 comprises a substantially cylindrical first end portion 4 for insertion into a piece of tubing T. The first end portion 4 extends along a longitudinal axis L from a base portion 4a of the first end portion 4 to a free end portion 4b of the first end portion 4. Also, the first end portion 4 is provided with a plurality of circumferential ridges 5 provided on a radial outside of the first end portion 4 with respect to the longitudinal axis L.

The metal sleeve 3 is substantially cylindrical and is provided radially outside of the first end portion 4 such that a space S is formed between the first end portion 4 and the metal sleeve 3 for receiving said piece of tubing T between the first end portion 4 and the metal sleeve 3.

The metal sleeve 3 is attached to the core member 2.

The metal sleeve 3 extends axially along the longitudinal axis L between an inner end portion 3a of the metal sleeve 3 and an outer end portion 3b of the metal sleeve 3. The metal sleeve 3 comprises one or more elongate openings 6, each elongate opening 6 extending along the longitudinal axis L.

Upon attachment of the tubing T to the coupling device 1, the tubing T is inserted into the space between the metal sleeve 3 and the first end portion 4 of the core member 2 until the tubing T is seated at the bottom of the space. A standard press tool (using a TH-type pressing tong) is then applied over the sleeve and operated to compress the sleeve radially inwards with respect to the longitudinal axis to the predetermined outer shape defined by the press tool. The radial compression of the sleeve reduces the space and forces the tubing T against the first end portion 4 of the core member 2 such that the circumferential ridges 5 are forced radially into the material of the tubing T and thereby mechanically engages the tubing T to in a fixed position with respect to the coupling device 1. Upon compression, the metal sleeve 3 is plastically deformed and thus remains compressed after removal of the press tool. The elongate openings 6 enable the metal sleeve 3 to assume a substantially cylindrical shape after radial compression and thus enable an even application of radial press force from the sleeve onto the tubing T. Since the sleeve is attached to the core member 2, at least before use of the press tool, the sleeve will maintain its intended position relatively the core member 2 upon insertion of the tubing T into the coupling device 1, thus promoting correct installation of the coupling device 1, whilst reducing the risk of losing the metal sleeve upon handing of the coupling device 1 before use.

In the embodiment of the metal sleeve 3 shown in figs. 1-3 and 6-7, each one of the one or more elongate openings 6 extends between the inner end portion 3a and the outer end portion 3b such that a respective confined through opening is formed.

The confined nature of each elongate opening 6 means that the elongate opening 6 is surrounded by metal also at its respective opposite ends, and the material at each end of the elongate opening 6 can thus be plastically deformed upon compression by the press tool, thereby providing a well-defined geometry of the metal sleeve 3 at both ends of the elongate opening 6. This in turn provides for a robust metal sleeve 3, capable of providing a robust clamping force on the tubing T.

In other embodiments, the metal sleeve 3 may alternatively be configured as shown in figs. 4-5. In this alternative embodiment, each one of the one or more elongate openings 6 extends partially along the length of the metal sleeve 3 from an open end portion 6a of the respective elongate opening 6 at the inner end portion 3a or at the outer end portion 3b, towards a closed end portion of the respective elongate opening 6 at the other one of the inner end portion 3a or the outer end portion 3b.

The open ended nature of each elongate opening 6 enables reduction of a circumferential size of the metal sleeve 3 at the portion of the metal sleeve 3 at the open end of the respective elongate opening 6 with reduced need of creep of material of the metal sleeve 3. This enables a smoother inner surface of the metal sleeve 3 after compression and enables use of lower compression force at compression of the metal sleeve 3. Also, the metal sleeve 3 will be able to expand upon insertion of an oversized tubing T into the space between the core member 2 and the metal sleeve 3.

When more than one open-ended elongate opening 6 is provided, all of the open-ended elongate openings 6 of the coupling device 1 may be configured with their open ends facing a same longitudinal end of the metal sleeve 3 (embodiment not shown in figures). However, a preferred alternative embodiment of the metal sleeve 3 with open-ended elongate openings 6 is shown in figs. 4-5, in which the metal sleeve 3 comprises a plurality of said elongate openings 6, wherein at least one of said plurality of elongate openings 6 is adapted such that its respective open end portion is positioned at the inner end portion 3a of the metal sleeve 3, and wherein at least one of said plurality of elongate openings 6 is adapted such that its respective open end portion is positioned at the outer end portion 3b of the metal sleeve 3.

Such configuration of the open ends of the elongate openings 6 enables reduction of a circumferential size of the metal sleeve 3 at both ends of the metal sleeve 3 with reduced need of creep of material of the metal sleeve 3. This enables a smoother inner surface of the metal sleeve 3 after compression and enables use of lower compression force at compression of the metal sleeve 3. Also, the metal sleeve 3 will be able to expand upon insertion of an oversized tubing T into the space between the core member 2 and the metal sleeve 3.

Preferably every other open end is positioned at the outer end portion 3b of the metal sleeve 3, and the other open ends of the elongate openings 6 are provided at the inner end portion 3a of the metal sleeve 3.

The metal sleeve 3 is attached to the core member 2 at the base portion 4a of the first end portion 4. In other embodiments, the attachment between the metal sleeve 3 and the core member 2 may be provided at any other position along the longitudinal axis, such as at the middle of the metal sleeve 3.

By attaching the sleeve to the core member 2 at the base portion 4a of the first end portion 4, the material needed to attach the metal sleeve 3 will not interfere with the tubing T upon insertion of the tubing T into the coupling device 1, thereby allowing the metal sleeve 3 to maintain its position upon insertion of the tubing T.

The coupling device 1 comprises a ring 7 attaching the metal sleeve 3 to the core member 2.

The ring 7 acts as an adapter between the metal sleeve 3 and the core member 2, thus simplifying the design of the metal sleeve 3 and enabling easier production.

As shown in figs. 1 and 3, the ring 7 comprises an attachment portion 7a extending over a radial outside of the metal sleeve 3, said attachment portion 7a engaging the inner end portion 3a of the metal sleeve 3 to attach the metal sleeve 3 to the ring 7. The attachment portion 7a attaches the metal sleeve 3 to the ring 7, and thus to the rest of the coupling device 1. Since the ring 7 engages the radial outside of the metal sleeve 3, the ring 7 will not interfere with the seal formed at compression between the metal sleeve 3 and the core member 2.

As shown in fig. 1, the inner end portion 3a of the metal sleeve 3 comprises a circumferential recess 3c provided on a radial outside of the metal sleeve 3, wherein the one or more attachment portions 7a engage the circumferential recess 3c of the metal sleeve 3.

The circumferential recess 3c enables improved mechanical grip between the ring 7 and the metal sleeve 3 such that the attachment between ring 7 and metal sleeve 3 is not dependent on friction alone, or on an adhesive between the metal sleeve 3 and the ring.

However, the attachment between the metal sleeve 3 and the core member 2 may in other embodiments alternatively be achieved in any other suitable way, such as using a suitable glue/cement, or using protrusions of the metal sleeve 3, such as radially inwards extending flanges or flaps (not shown), engaging the core member.

As shown in fig. 1, the ring 7 comprises a central recess 7b adapted to receive an end portion of the piece of tubing T. The ring 7 further comprises one or more inspection openings 7c extending radially through the material of the ring 7 such that the piece of tubing T inserted into the central recess 7b is visible through the one or more inspection openings 7c. Alternatively, the inspection openings 7c may in other embodiments be omitted.

When an end portion of a piece of tubing T is fully inserted into the space between the metal sleeve 3 and the core member 2, the end portion of the piece f tubing T is visible through the one or more inspection openings 7c such an operator knows that the coupling device 1 is correctly aligned with the tubing T before compression of the coupling device 1.

As shown in fig. 1, the ring 7 comprises an alignment protrusion 7d extending radially outwards, said alignment protrusion 7d being adapted to align the metal sleeve 3 with a guide recess of a pressing tong, such as a TH-type pressing tong (see figs. 6-7). The configuration of the recess is adapted to match the type of pressing tong for which the used.

By providing the alignment protrusion 7d on the ring 7, manufacturing of the metal sleeve 3 and of the core member 2 may be kept simple. Since the alignment protrusion 7d is not provided on the metal sleeve 3, deformation of the metal sleeve 3 will not affect the alignment.

The metal sleeve 3 comprises at least one radial protrusion 3d extending radially inwards with respect to the longitudinal axis L. In other embodiments, the radial protrusion 3d may alternatively be omitted.

The radial protrusion increases the total radial thickness of the metal sleeve 3 without requiring increase of material thickness of the metal sleeve 3. The inner diameter at the radially innermost portion of the radial protrusion is positioned at a radial distance from the longitudinal axis large enough to enable insertion of the outer diameter of the largest type of tubing T commonly available on the market. The protrusion thus enables the outer diameter of the metal sleeve 3 to be positioned further radially outwards. At compression the final outer shape of the coupling device 1 is defined by the pressing tong used; Accordingly, the compressed outer shape of the metal sleeve 3 is defined and the radial protrusion will thus enable increased radial compression locally by the radial protrusion. Accordingly, when some other type of tubing T having a slightly smaller outer diameter, the radial protrusion ensures that the metal sleeve 3 still fully compresses the tubing T to provide a proper seal between the core member 2 and the tubing T.

The first end portion 4 of the core member 2 comprises two circumferential recesses 8, and a respective elastic ring-shaped sealing element 9 seated in the respective circumferential recess 8, each circumferential recess 8 being axially aligned with one of said radial protrusions 3d. In other embodiments, only one circumferential recess 8 may be provided, or more than two circumferential recesses 8 may be provided.

The combination of radial protrusion and sealing element aligned with the radial respective protrusion enables the radial protrusion to be moved further radially inwards at compression of the metal sleeve 3 with less deformation of the radial protrusion of the metal sleeve 3 and with reduced creep of material of the metal sleeve 3 and of the tubing T. The sealing element ensures that the radial protrusion seals to the tubing at the circumferential recess 8 of the core member 2.

In the embodiment of fig. 1, the sealing element 9 comprises an O-ring but in other embodiments, any other suitable sealing element 9 may alternatively be used instead, such as an elastomer molded onto the core member 2, or some other removable sealing element 9 shaped in a suitable way. It should be noted that the sealing element 9 should be designed so as to allow for water to leak past the sealing element after insertion of the tubing into the coupling device 1 and before the metal sleeve 3 is compressed. In other words, the sealing member 9 should preferably not extend radially outside of the respective circumferential recess 8 of the core member 2.

O-rings are commonly available and provide a uniform seal around the circumferential recess. Alternatively, an elastomer could be molded over a portion of the core member 2 to function as the sealing element 9.

In the embodiment of fig. 1, the outer end portion 3b of the metal sleeve 3 is frustoconical with a larger diameter closer to the outer end portion 3b of the metal sleeve 3 and a smaller diameter closer to the inner end portion 3a of the metal sleeve 3.

The frustoconical portion provides a lead-in portion receiving and forcing a piece of tubing to alignment with the longitudinal axis at insertion of the tubing into the coupling device 1. Accordingly, easier assembly of the coupling device 1 to the tubing is achieved.

It should be understood that many variations of the shape of the elongate opening 6 is possible within the scope of the present invention, as long as the elongate opening is shaped such that it has a component extending along the longitudinal axis, i.e. the elongate slit cannot extend 90 degrees to the longitudinal axis. Also, although the illustrated embodiments of the elongate openings 6 show straight openings, the invention is not limited to straight elongate openings but also covers at least curved elongate openings, V-shaped openings, and wave shaped openings.

The invention also relates to a system comprising the coupling device 1 described above, and a press tool. The press tool comprises a pressing tong PT adapted to be movable between an open position for insertion of the metal sleeve 3 of the coupling device 1 into a compression gap of the pressing tong PT, and a closed position in which the gap is reduced such that at least a central portion of the metal sleeve 3 is forced by the pressing tong PT to assume a radially compressed shape.

Upon movement of the pressing tong from the open position to the closed position, the metal sleeve 3 is plastically deformed into its radially compressed shape, thus retaining the coupling device 1 attached to the tubing.

In the embodiment shown in figs. 6 and 7, the pressing tong PT is a TH-type pressing tong. In other embodiments, any other suitable pressing tong may be used instead.

| | |
|---|---|
| 1 | coupling device |
| 2 | core member |
| 3 | metal sleeve |
| 3a | inner end portion of metal sleeve |
| 3b | outer end portion of metal sleeve |
| 3c | circumferential recess of metal sleeve |
| 3d | radial protrusion of metal sleeve |
| 4 | first end portion of core member |
| 4a | base portion of first end portion |
| 4b | free end portion of first end portion |
| 5 | circumferential ridge |
| 6 | elongate opening |
| 6a | open end portion of elongate opening |
| 6b | closed end portion of elongate opening |
| 7 | ring |
| 7a | attachment portion |
| 7b | central recess of ring |
| 7c | inspection opening of ring |
| 7d | alignment protrusion |
| 8 | circumferential recess of core member |
| 9 | sealing element |
| L | longitudinal axis |
| T | piece of tubing |
| TH | pressing tong |

*Table of reference numerals*

## Claims

1. A coupling device (1) for tubing, typically for plastic tubing such as PEX-tubing or ALU PEX-tubing, said coupling device comprising a core member (2) and a metal sleeve (3),
said core member (2) comprising a substantially cylindrical first end portion (4) for insertion into a piece of tubing (T), said first end portion (4) extending along a longitudinal axis (L) from a base portion (4a) of the first end portion (4) to a free end portion (4b) of the first end portion (4), and said first end portion (4) being provided with a plurality of circumferential ridges (5) provided on a radial outside of the first end portion (4) with respect to the longitudinal axis (L),
said metal sleeve (3) being substantially cylindrical and provided radially outside of the first end portion (4) such that a space (S) is formed between the first end portion (4) and the metal sleeve (3) for receiving said piece of tubing (T) between the first end portion (4) and the metal sleeve (3),
said metal sleeve (3) being attached to the core member (2) at a pre-determined position relatively the core member (2),
said metal sleeve (3) extending axially along the longitudinal axis (L) between an inner end portion (3a) of the metal sleeve (3) and an outer end portion (3b) of the metal sleeve (3), and
said metal sleeve (3) comprising one or more elongate openings (6), each elongate opening (6) extending along the longitudinal axis (L),
wherein each one of the one or more elongate openings (6) extends between the inner end portion (3a) and the outer end portion (3b) such that a respective confined through opening is formed.

2. The coupling device (1) according to claim 1, wherein each one of the one or more elongate openings (6) extends partially along the length of the metal sleeve (3) from an open end portion (6a) of the respective elongate opening (6) at the inner end portion (3a) or at the outer end portion (3b), towards a closed end portion (6b) of the respective elongate opening at the other one of the inner end portion (3a) or the outer end portion (3b).

3. The coupling device according to claim 2, wherein the coupling device (1) comprises a plurality of said elongate openings (6), wherein at least one of said plurality of elongate openings (6) is adapted such that its respective open end portion is positioned at the inner end portion (3a) of the metal sleeve (3), and wherein at least one of said plurality of elongate openings (6) is adapted such that its respective open end portion is positioned at the outer end portion (3b) of the metal sleeve (3).

4. The coupling device (1) according to any one of claims 1-3, wherein the metal sleeve (3) is attached to the core member (2) at the base portion (4a) of the first end portion (4).

5. The coupling device (1) according to claim 4, further comprising a ring (7) attaching the metal sleeve (3) to the core member (2).

6. The coupling device (1) according to claim 5, wherein the ring (7) comprises one or more attachment portions (7a) extending over a radial outside of the metal sleeve (3), said attachment portions (7a) engaging the inner end portion (3a) of the metal sleeve (3) to attach the metal sleeve (3) to the ring (7).

7. The coupling device (1) according to claim 6, wherein the inner end portion (3a) of the metal sleeve (3) comprises a circumferential recess (3c) provided on a radial outside of the metal sleeve (3), wherein the one or more attachment portions (7a) engage the circumferential recess (3c) of the metal sleeve (3).

8. The coupling device (1) according to any one of claims 5-7, wherein the ring (7) comprises a central recess (7b) adapted to receive an end portion of the piece of tubing (T) and comprises one or more inspection openings (7c) extending radially through the material of the ring (7) such that the piece of tubing (T) inserted into the central recess (7b) is visible through the one or more inspection openings (7c).

9. The coupling device (1) according to any one of claims 5-8, wherein the ring (7) comprises an alignment protrusion (7d) extending radially outwards, said alignment protrusion (7d) being suitable for aligning the metal sleeve (3) with a guide recess of a pressing tong (PT), such as a TH-type pressing tong.

10. The coupling device (1) according to any one of the preceding claims, wherein the metal sleeve (3) comprises at least one radial protrusion (3d) extending radially inwards with respect to the longitudinal axis (L).

11. The coupling device (1) according to claim 10, wherein the first end portion (4) of the core member (2) comprises one or more circumferential recesses (8), and a respective elastic ring-shaped sealing element (9) seated in the respective circumferential recess (8) of the core member (2), each circumferential recess (8) of the core member (2) being axially aligned with one of said at least one radial protrusions (3d).

12. The coupling device (1) according to claim 11, wherein said sealing element (9) comprises an O-ring.

13. The coupling device (1) according to any one of the preceding claims, wherein the outer end portion (3b) of the metal sleeve (3) is frustoconical with a larger diameter closer to the outer end portion (3b) of the metal sleeve (3) and a smaller diameter closer to the inner end portion (3a) of the metal sleeve (3).

14. A system comprising the coupling device (1) according to any one of claims 1-13, and a press tool, said press tool comprising a pressing tong (PT) adapted to be movable between an open position for insertion of the metal sleeve (3) of the coupling device (1) into a compression gap of the pressing tong (PT), and a closed position in which the gap is reduced such that at least a central portion of the metal sleeve (3) is forced by the pressing tong (PT) to assume a radially compressed shape.

15. A system according to claim 14, wherein the pressing tong is a TH-type pressing tong (PT).
